# EUROPÄISCHE PATENTSCHRIFT

(11) **EP 3 755 972 B1**
(45) Veröffentlichungstag und Bekanntmachung des Hinweises auf die Patenterteilung: **05.04.2023**
(21) Anmeldenummer: 19706875.2
(22) Anmeldetag: 05.02.2019
(51) Int. Cl.: G01C 21/32

(54) **ERSTELLEN EINER GEOGRAPHISCHEN KARTE**
BUILDING A GEOGRAPHIC MAP
CONSTRUIRE UNE CARTE GEOGRAPHIQUE

(30) Priorität: 22.02.2018 DE 102018202689
(43) Veröffentlichungstag der Anmeldung: 30.12.2020
(73) Patentinhaber: Bayerische Motoren Werke Aktiengesellschaft, 80809 München (DE)
(72) Erfinder: LOTTES, Alexander, 85551 Kirchheim b. München (DE)
(86) Internationale Anmeldenummer: PCT/DE2019/100118
(87) Internationale Veröffentlichungsnummer: WO 2019/161836

(56) Entgegenhaltungen:
- DE-A1-102006 055 958
- US-B1- 6 532 304

## Beschreibung

Die Erfindung betrifft eine geographische Karte, insbesondere zur Navigation eines Kraftfahrzeugs. Insbesondere betrifft die Erfindung das Abgleichen von Kartenobjekten aus unterschiedlichen Quellen.

Eine geographische Karte umfasst eine Anzahl Objekte, wobei jedem Objekt eine oder mehrere Objektinformationen zugeordnet sind. Die Karte und die Objekte können insbesondere digital repräsentiert und beispielsweise zur Navigation einer Person oder eines Kraftfahrzeugs bereitgestellt werden. Jedem Objekt ist eine eindeutige Kennung zugeordnet, sodass die Objekte leicht adressiert werden können. Zur Population der Karte können mehrere Quellen genutzt werden, die beispielsweise unterschiedliche Objektinformationen bereitstellen können. Eine Zusammenführung der Objekte der unterschiedlichen Quellen kann jedoch schwierig sein, wenn Objekte aus unterschiedlichen Quellen unterschiedliche Systeme von Kennungen verwenden.

Eine der Erfindung zu Grunde liegende Aufgabe besteht darin, eine verbesserte Technik zur Verwaltung einer geographischen Karte anzugeben. Die Erfindung löst dieses Problem mittels der Gegenstände der unabhängigen Ansprüche. Unteransprüche geben bevorzugte Ausführungsformen wieder.

US 6 532 304 B1 betrifft eine Technik zum Bestimmen übereinstimmender Bögen zwischen geometrischen Objekten aus verschiedenen elektronischen Karten. Zwei Bögen werden als einander entsprechend bestimmt, wenn Polygone, durch die sie jeweils begrenzt sind, einander entsprechen.

DE 10 2006 055 958 A1 schlägt eine Technik zum Abspeichern einer Vielzahl geometrischer Objekte vor. Für Gruppen einander ähnlicher Objekte wird jeweils ein Repräsentant ermittelt und abgespeichert. Anstelle der kompletten geometrischen Objekte können dann Verweise auf die jeweils zugeordneten Repräsentanten abgespeichert werden.

Eine geographische Karte umfasst eines oder mehrere Objekte, wobei jedem ersten Objekt eine eindeutige Kennung zugeordnet ist.

Nach einem ersten Aspekt der Erfindung umfasst ein Verfahren zum Verwalten der geographischen Karte Schritte des Erfassens der Karte; des Erfassens eines zweiten Objekts, wobei den ersten und dem zweiten Objekt jeweils wenigstens eine Objektinformation zugeordnet ist; des Bestimmens eines dritten Objekts, das unter den ersten Objekten die größte Ähnlichkeit zum zweiten Objekt aufweist; und des Zuordnens der Kennung des dritten Objekts zum zweiten Objekt, falls die bestimmte größte Ähnlichkeit ein vorbestimmtes Maß übersteigt.

Es wird davon ausgegangen, dass das zweite Objekt keine gültige Kennung umfasst. Beispielsweise können Objekte aus unterschiedlichen Quellen an einer zentralen Stelle, welche das Verfahren durchführt, mit eindeutigen Kennungen versehen werden, die dann unter allen Quellen gleich sind. Durch das Vergleichen der Ähnlichkeit mit dem vorbestimmten Maß kann sichergestellt werden, dass dem zweiten Objekt eine bereits verwendete Kennung zugeordnet wird, falls das zweite Objekt bereits bekannt ist bzw. mit einem bereits bekannten Objekt genau genug übereinstimmt. Eine inflationäre Vergabe von Kennungen kann vermieden werden. Mit Kennungen versehene Objekte können jeweils disjunkt sein und verbessert miteinander verglichen oder in Kontext gesetzt werden.

Erfindungsgemäß wird eine neue eindeutige Kennung bestimmt und dem zweiten Objekt zugeordnet, falls die Ähnlichkeit zwischen dem zweiten Objekt und dem dritten Objekt unterhalb eines vorbestimmten Maßes liegt, nämlich unterhalb des oben genannten vorbestimmten Maßes oder eines geringeren Maßes als diesem. So kann erreicht werden, dass eine neue Kennung nur vergeben wird, wenn das zweite Objekt mit keinem der bereits von der Karte umfassten ersten Objekten übereinstimmt.

Bevorzugt kann der Karte ein neues erstes Objekt zugeordnet werden, und dem neuen ersten Objekt eine neue Kennung und die Objektinformationen des zweiten Objekts zugeordnet werden, falls die Ähnlichkeit zwischen dem zweiten Objekt und dem dritten Objekt unterhalb des vorbestimmten Maßes liegt. Die Objektinformationen des zweiten Objekts können so in die Karte aufgenommen werden, um die Basis bekannter erster Objekte zu erweitern.

Objektinformationen des zweiten Objekts können mit denen des dritten Objekts integriert werden, falls die Ähnlichkeit zwischen dem zweiten Objekt und dem dritten Objekt das vorbestimmte Maß übersteigt. Das Integrieren kann ein Überschreiben, eine Mittelwertbildung, eine Fusionierung oder eine andere bekannte Technik der Überlagerung umfassen. Optional können auch alle Objektinformationen, die nicht eindeutig übereinstimmen, separat dem Objekt zugeordnet werden.

Die ersten Objekte und das zweite Objekt können demselben vorbestimmten geographischen Ausschnitt der Karte zugeordnet sein. Insbesondere kann die Karte in vorbestimmte Abschnitte, die auch Kacheln genannt werden können, unterteilt sein und die ersten Objekte und das zweite Objekt können sich auf dieselbe Kachel beziehen. Für das Unterteilen eines geographischen Gebiets oder eines Geoids in Kacheln und das Zuordnen eines Objekts zu einer Kachel sind bereits Techniken bekannt, die allgemein akzeptiert und bei allen Quellen in gleicher oder entsprechender Weise verwendet werden können. Durch das Unterteilen der Karte in Kacheln können Suchen oder die oben beschriebene Ähnlichkeitsbestimmung aufgrund des kleineren Suchraums schneller durchgeführt werden. Außerdem kann dadurch ein Namensraum der Kennungen verkleinert werden, sodass Speicherplatz eingespart werden kann.

Die Ähnlichkeit zwischen einem ersten und dem zweiten Objekt wird erfindungsgemäß bezüglich Ähnlichkeiten einander entsprechender Objektinformationen bestimmt werden. Dabei werden bevorzugt nur solche Objektinformationen berücksichtigt, die einen Rückschluss auf die Identität des Objekts erlauben. Andere Objektinformationen können hingegen unbeachtlich sein. Außerdem kann die Ähnlichkeitsbestimmung auf diejenigen Objektinformationen beschränkt werden, für die das betrachtete erste und das zweite Objekt beide einen Wert aufweisen.

Beispielsweise können die für die Ähnlichkeitsbestimmung betrachteten Objektinformationen geographische Positionen des ersten und des zweiten Objekts umfassen. Erstrecken sich die Objekte über einen bekannten Bereich, können die Positionen ausgezeichneter Punkte beispielsweise von Anfangs- und Endpunkten, miteinander verglichen werden. Beim Vergleich von Positionen kann berücksichtigt werden, dass Anfangs- und Endpunkte an beiden Objekten gegensinnig gewählt sein können. Außerdem können unterschiedlich genaue Positionsangaben berücksichtigt werden, um Rundungsfehler zu vermeiden. Darüber hinaus können unterschiedliche Positionsangaben ineinander umgerechnet werden.

So kann etwa eine als Himmelsrichtung angegebene Erstreckungsrichtung des ersten Objekts mit einer durch geographische Punkte angegebenen Richtung oder Trajektorie des zweiten Objekts verglichen werden. In einem anderen Beispiel kann eine geographische Position auf der Basis einer Angabe der Kreuzung zweier Straßen bestimmt werden oder umgekehrt. Weiter kann berücksichtigt werden, dass Positionsinformationen aus einer Quelle, von der das zweite Objekt stammt, üblicherweise eine vorbestimmte, konstante Abweichung gegenüber den Positionsinformationen der ersten Objekte aufweist. In der Praxis wurden derartige Abweichungen (Offsets) von bis zu ca. 40 m beobachtet.

Die für die Ähnlichkeitsbestimmung betrachteten Objektinformationen können auch Ausdehnungen des ersten und des zweiten Objekts umfassen. Die Größen der Objekte können jeweils in einer, in zwei oder in drei Dimensionen bestimmt und verglichen werden.

Die betrachteten Objektinformationen können weiter einen Objekttyp umfassen. So können Objekte voneinander getrennt werden, deren Positionen oder Verläufe geographisch übereinstimmen, aber unterschiedlichen Zwecken dienen, beispielsweise eine Straße und eine darunter liegende Untergrundbahnlinie.

Die Objektinformationen, die für die Ähnlichkeitsbestimmung betrachtet werden, können ferner auch Hinweis auf ein anderes erstes Objekt umfassen. Objektgeflechte können so verbessert bestimmt und miteinander verglichen werden. So kann insbesondere ein zweites Objekt, das in einer vorbestimmten Relation zu einem (bekannten) ersten Objekt steht, verbessert mit anderen ersten Objekten verglichen werden.

In einer weiteren Ausführungsform betreffen die betrachteten ersten und das zweite Objekt jeweils einen Verkehrsweg und zur Ähnlichkeitsbestimmung wird eine Flussrichtung des Verkehrs betrachtet.

Das Verfahren kann in einer weiteren Ausführungsform die Basis für eine Navigation eines Kraftfahrzeugs bilden. Dazu kann das Verfahren an Bord des Kraftfahrzeugs durchgeführt werden oder von der bestimmten Karte kann ein Teil in das Kraftfahrzeug übertragen werden.

Nach einem weiteren Aspekt der Erfindung umfasst eine Vorrichtung zur Verwaltung einer geographischen Karte eine Speichervorrichtung zur Ablage einer Karte, die eines oder mehrere erste Objekte umfasst, wobei jedem ersten Objekt eine eindeutige Kennung zugeordnet ist; eine Schnittstelle zur Erfassung eines zweiten Objekts, wobei den ersten und dem zweiten Objekt jeweils wenigstens eine Objektinformation zugeordnet ist; und eine Verarbeitungseinrichtung. Dabei ist die Verarbeitungseinrichtung dazu eingerichtet, ein drittes Objekt zu bestimmen, das unter den ersten Objekten die größte Ähnlichkeit zum zweiten Objekt aufweist; und die Kennung des dritten Objekts dem zweiten Objekt zuzuordnen, falls die bestimmte größte Ähnlichkeit ein vorbestimmtes Maß übersteigt; und eine neue eindeutige Kennung (160) zu bestimmen und die neue Kennung (160) dem zweiten Objekt (170) zuzuordnen, falls die bestimmte Ähnlichkeit zwischen dem zweiten Objekt (170) und dem dritten Objekt (175) unterhalb eines zweiten vorbestimmten Maßes liegt, wobei das zweite Maß kleiner als das erste Maß oder so groß wie das erste Maß ist..

Es ist bevorzugt, dass die Verarbeitungseinrichtung dazu eingerichtet ist, ein hierin beschriebenes Verfahren durchzuführen. Dazu kann das Verfahren ganz oder teilweise in Form eines Computerprogrammprodukts vorliegen oder auf einem computerlesbaren Datenträger gespeichert sein. Merkmale oder Vorteile des Verfahrens können auf die Vorrichtung übertragen werden und umgekehrt.

Die Verarbeitungseinrichtung kann dazu eingerichtet sein, dem zweiten Objekt eine eindeutige Kennung zuzuordnen, wobei die Vorrichtung ferner eine weitere Schnittstelle zur Bereitstellung der Kennung umfasst. Eine Quelle von Kartenobjekten kann ein von ihm erstelltes zweites Objekt mittels der ersten Schnittstelle bereitstellen und über die zweite Schnittstelle eine zugeordnete Kennung beziehen. Eine das Verfahren ausführende Stelle kann dabei sicherstellen, dass keine unterschiedlichen Kennungen für einander entsprechende Objekte ausgegeben werden oder dass die gleichen Kennungen für unterschiedliche Objekte ausgegeben werden. Eine Quelle für die zweiten Objekte kann dann die Objekte mit weiteren Objektinformationen anreichern, abgleichen oder sonstwie aktualisieren. Dabei kann sie die zugeordneten Kennungen verwenden, sodass die Objektinformationen unterschiedlicher Quellen miteinander vergleichbar sein können.

Ein Anwender, beispielsweise an Bord eines Kraftfahrzeugs, kann Objekte von mehreren Quellen beziehen wobei den Objekten zugeordnete Kennungen nach dem gleichen System vergeben wurden, also ungeachtet der Objektquelle gleiche Kennungen nur gleichen Objekten und verschiedene Kennungen nur verschiedenen Objekten zugeordnet sind. Dadurch kann der Anwender von der breiteren Datenbasis mehrerer Quellen profitieren. Eine Navigation kann durch die direkte Vergleichbarkeit der Objekte aus unterschiedlichen Quellen deutlich verbessert werden.

Die Erfindung wird nun mit Bezug auf die beigefügten Zeichnungen genauer beschrieben, in denen:
- Figur 1: ein System;
- Figur 2: ein Ablaufdiagramm eines beispielhaften Verfahrens zum Verwalten einer geographischen Karte; und
- Figur 3: eine Bestimmung von Ähnlichkeit zwischen zwei Objekten illustriert.

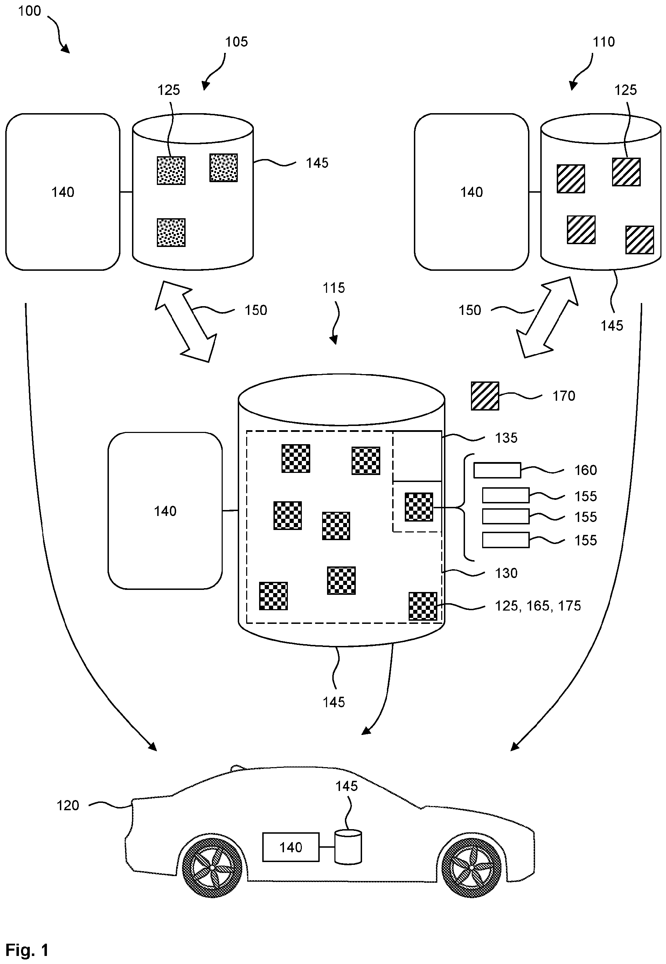

Fig. 1 zeigt ein System 100, das eine erste Quelle 105, eine zweite Quelle 110, eine zentrale Stelle 115 sowie optional einen Nutzer 120 umfasst. Die Quellen 105, 110 sind jeweils dazu eingerichtet, Objekte 125 bereitzustellen, die sich auf eine geographische Karte 130 beziehen. Bevorzugt ist jedem Objekt 125 ein vorbestimmter Abschnitt 135 der Karte 130 zugeordnet. Das Unterteilen der Karte 130 in Abschnitte 135, die auch Kacheln genannt werden können, erfolgt dabei auf den Quellen 105, 110 und der zentralen Stelle 115 jeweils auf die gleiche Weise. An der zentralen Stelle 115 sind bevorzugt alle Kacheln 135 der Karte 130 angelegt, an den Quellen 105, 110 können jeweils auch weniger Kacheln 135 vorgehalten werden. Es können auch mehr als zwei Quellen 105, 110 vorgesehen sein, die im Rahmen der hier vorgestellten Technik bevorzugt im Wesentlichen gleich arbeiten.

Die Quellen 105, 110 und die zentrale Stelle 115 umfassen jeweils eine Verarbeitungsvorrichtung 140 und eine Speichervorrichtung 145 und können bevorzugt als datenverarbeitende Anlagen, insbesondere als Computersysteme, serverbasierte Systeme oder Dienste ausgelegt sein. Über eine Schnittstelle 150 kann die zentrale Stelle 115 mit den Quellen 105, 110 kommunizieren.

Jedem Objekt 125 sind eine oder mehrere Objektinformationen 155 zugeordnet. Zumindest den Objekten 125 der zentralen Stelle 115 ist außerdem jeweils eine Kennung 160 zugeordnet, die eindeutig unter allen anderen abgespeicherten Objekten 125 oder zumindest unter allen anderen abgespeicherten Objekten der gleichen Kachel 135 ist. Die Kennung 160 kann beispielsweise eine laufende Nummer oder eine Zufallszahl umfassen.

Üblicherweise beschreibt jedes Objekt 125 der Quellen 105, 110 oder der zentralen Stelle 115 eine Sache, die zur Nutzung durch den Nutzer 120 verwendet werden kann, beispielsweise zur Navigation. Dazu kann der Nutzer 120, der hier rein exemplarisch als Kraftfahrzeug dargestellt ist, ebenfalls eine Verarbeitungseinrichtung 140 und einen Datenspeicher 145 umfassen. Beispielsweise über eine drahtlose Schnittstelle (nicht dargestellt) können Objekte 125 in den lokalen Datenspeicher 145 geladen werden. Dabei werden üblicherweise nur Objekte 125 von solchen Kacheln 135 geladen, die für eine anstehende Navigationsaufgabe auch benötigt werden.

Damit die Objekte 125 unterschiedlicher Quellen 105, 110 beim Nutzer miteinander beispielsweise zur Navigation verwendet werden können, soll jedem Objekt 125 eine Kennung 160 zugeordnet werden, die - gegebenenfalls innerhalb einer zugeordneten Kachel 135 - eindeutig ist. Unterschiedliche Objekte 125 sollen unterschiedliche Kennungen 160 und gleiche Objekte 125 gleiche Kennungen 160 erhalten, auch wenn die Objekte 125 von verschiedenen Quellen stammen.

Es wird vorgeschlagen, die Kennungen 160 für die Objekte 125 aller Quellen 105, 110 jeweils durch die zentrale Stelle 115 zu vergeben. Dazu kann jede Quelle 105, 110 ihre Objekte 125 ganz oder teilweise der zentralen Stelle 115 zugänglich machen und eine eindeutige Kennung 160 zurückgeliefert bekommen. Die zentrale Stelle 115 stellt sicher, dass die Kennungen 160 eindeutig sind. Anschließend kann jede Quelle 105, 110 das Objekt 125 weiter verarbeiten, beispielsweise indem eine Objektinformation 115 aktualisiert, hinzugefügt oder zu entfernt wird. Dabei bleibt die zuvor zugeordnete Kennung 160 bevorzugt erhalten.

Für die nun folgende Beschreibung der Bestimmung der Ähnlichkeit zwischen Objekten 125 wird ein seitens der zentralen Stelle 115 bekanntes, also in der Speichereinrichtung 145 angelegtes Objekt 125 auch erstes Objekt 165 und ein von einer Quelle 105, 110 der zentralen Stelle 115 zugänglich gemachtes Objekt 125 zweites Objekt 170 genannt. Die Bestimmung der Ähnlichkeit erfolgt also zwischen einem bzw. mehreren ersten Objekten 165 (der zentralen Stelle 115) und einem zweiten Objekt 170 (der Quelle 105, 110). Dasjenige erste Objekt 165, das dem zweiten Objekt 170 am ähnlichsten ist, wird hierin auch als drittes Objekt 175 bezeichnet.

Es wird vorgeschlagen, dem zweiten Objekt 170 genau dann eine neue Kennung 160 zuzuordnen, wenn sich das zweite Objekt 170 hinreichend von allen ersten Objekten 165 unterscheidet. Andernfalls soll dem zweiten Objekt 170 die Kennung 160 desjenigen ersten Objekts 165 zugeordnet werden, dem das zweite Objekt 170 am ähnlichsten ist.

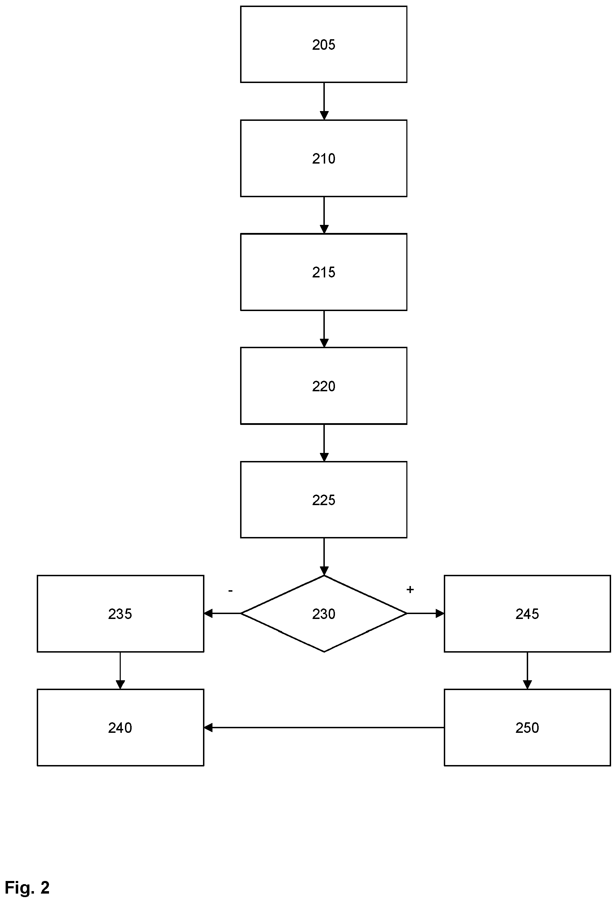

Figur 2 zeigt ein Ablaufdiagramm eines Verfahrens 200 zur Verwaltung einer geographischen Karte 130. Das Verfahren 200 kann insbesondere seitens der zentralen Stelle 115 ausgeführt werden. In einem optionalen ersten Schritt 205 wird die Karte 130 bereitgestellt. Zur besseren Erläuterung wird davon ausgegangen, dass die Karte 130 bereits mit einer Anzahl erster Objekte 165 bevölkert ist, obwohl das Verfahren 200 sinngemäß auch ohne initiale Befüllung mit ersten Objekten 165 funktioniert.

In einem folgenden Schritt 215 kann eine Kachel 135 bestimmt werden, in der das zweite Objekt 170 liegt. Eine typische Kachel 170 hat Kantenlängen von ca. 2 km mal ca. 2 km, wobei eine Zuordnung von geographischen Positionen zu Kacheln 135 als bekannte und überall gleich ausgeführte Operation angesehen wird. Die Zuordnung des zweiten Objekts 170 zur Kachel 135 kann auch seitens der Quelle 105, 110 erfolgen. Ein Objekt 125, das mehrere Kacheln 135 überspannt, kann an der Grenze zwischen den Kacheln 135 in unterschiedliche Objekte 125 unterteilt werden oder dasselbe Objekt 125 kann mehreren Kacheln 135 zugeordnet sein.

In einem Schritt 220 werden Ähnlichkeiten zwischen dem zweiten Objekt 170 und üblicherweise mehreren in Frage kommenden ersten Objekten 165 bestimmt. Insbesondere können Ähnlichkeiten zu allen ersten Objekten 165 der bestimmten Kachel 135 bestimmt werden. Da letztlich nur die größte Ähnlichkeit und das erste Objekt 165, zu dem die größte Ähnlichkeit besteht, bestimmt werden soll, kann dieser Schritt optimiert werden, indem die Bestimmung einer Ähnlichkeit abgebrochen wird, wenn sich abzeichnet, dass sie kleiner als eine andere, zuvor bestimmte Ähnlichkeit ist.

Die Ähnlichkeit wird bevorzugt als numerische Größe bestimmt, wobei ein großer Wert einer großen Ähnlichkeit entspricht und ein kleiner Wert einer geringen Ähnlichkeit. Zur Bestimmung der Ähnlichkeit können einer oder mehrere Objektinformationen 155 der Objekte 165, 170 in separaten Tests miteinander verglichen werden und die Ergebnisse der Tests können dann in die numerische Größe zusammengefasst werden, beispielsweise als Summe oder Durchschnitt. Einzelne Testergebnisse können dafür geeignet gewichtet werden. Ist eine zu betrachtende Objektinformation 115 nur einem der Objekte 165, 170 zugeordnet, so kann für ein Testergebnis ein vorbestimmter Wert angesetzt, oder der Test nicht gewertet werden.

Betrifft der Test geographische Koordinaten von Anfangs-, Zwischen- oder Endpunkten eines Objekts 165, 170, so kann das Testergebnis abhängig von einer absoluten oder relativen Abweichung zueinander korrespondierender Punkte sein. Ein weiterer Test kann Typen der Objekte 165, 170 miteinander vergleichen. Ein Typ kann beispielsweise eine Straße, einen Radweg oder einen Fußgängerweg betreffen. Der Typ kann auch ein Objekt 165, 170 angeben, das nicht unmittelbar für eine Navigation verwendbar ist, beispielsweise einen interessanten Punkt (point of interest, POI) oder eine Staatsgrenze. Weitere mögliche Objektinformationen 155, die zur Ähnlichkeitsbestimmung betrachtet werden können, umfassen beispielsweise Ausdehnungen der Objekte 165, 170, Verweise auf andere erste Objekte 165 oder, falls ein Verkehrsweg betroffen ist, vorbestimmte Fahrtrichtungen.

In einem Schritt 225, der auch mit dem Schritt 220 integriert ablaufen kann, wird dasjenige erste Objekt 165 bestimmt, das die höchste Ähnlichkeit mit dem zweiten Objekt 170 aufweist. Dieses erste Objekt 165 wird auch als drittes Objekt 175 bezeichnet. In einem Schritt 230 wird die bestimmte höchste Ähnlichkeit mit einem vorbestimmten Schwellenwert verglichen. Liegt die höchste Ähnlichkeit unterhalb dieses Schwellenwerts, so kann bestimmt werden, dass das zweite Objekt 170 neu ist. In einem Schritt 235 kann ein neues erstes Objekt 165 angelegt werden, dem dann die Objektinformationen 155 des zweiten Objekts 170 zugewiesen werden. Außerdem wird eine neue eindeutige Kennung 160 bestimmt und dem neuen ersten Objekt 165 zugeordnet. Die Kennung 160 wird in einem Schritt 240 bevorzugt der Quelle 105, 110 des zweiten Objekts 170 bereitgestellt. Die Quelle 105, 110 kann dann mit dem zweiten Objekt 170 weiterarbeiten, wobei die zugeordnete Kennung 160 bevorzugt stets erhalten bleibt.

Wird im Schritt 230 bestimmt, dass die bestimmte Ähnlichkeit oberhalb des vorbestimmten Schwellenwerts liegt, so wird in einem Schritt 245 die Kennung 160 des dritten Objekts 175 bestimmt und dem neuen ersten Objekt 165 zugeordnet. In einem Schritt 250 können

Objektinformationen 155 des zweiten Objekts 170 mit denen des ersten Objekts 165 fusioniert werden. Das Fusionieren kann ein Überschreiben, eine Mittelwertbildung oder ein Hinzufügen einer Objektinformation 155 zum ersten Objekt 165 umfassen. Ferner kann die bestimmte Kennung 160 im Schritt 240 bereitgestellt werden.

Im Anschluss können Bestandteile der Karte 130 von einem Benutzer 120 aus unterschiedlichen Quellen 105, 110 oder auch von der zentralen Stelle 115 bezogen werden. Beispielsweise können Objekte 125 einer vorbestimmten Kachel 135 aus mehreren Quellen 105, 110, 115 bezogen werden, wobei Objektinformationen 155 von erhaltenen Objekten 125 mit gleichen Kennungen 160 jeweils miteinander fusioniert werden können. Anschließend kann die Karte 130 bzw. die bezogenen Bestandteile der Karte 130 einer Navigation zu Grunde gelegt werden. Insbesondere kann eine Zielführung eines Kraftfahrzeugs 120 in Abhängigkeit einer aktuellen Position und einer Zielposition durchgeführt werden.

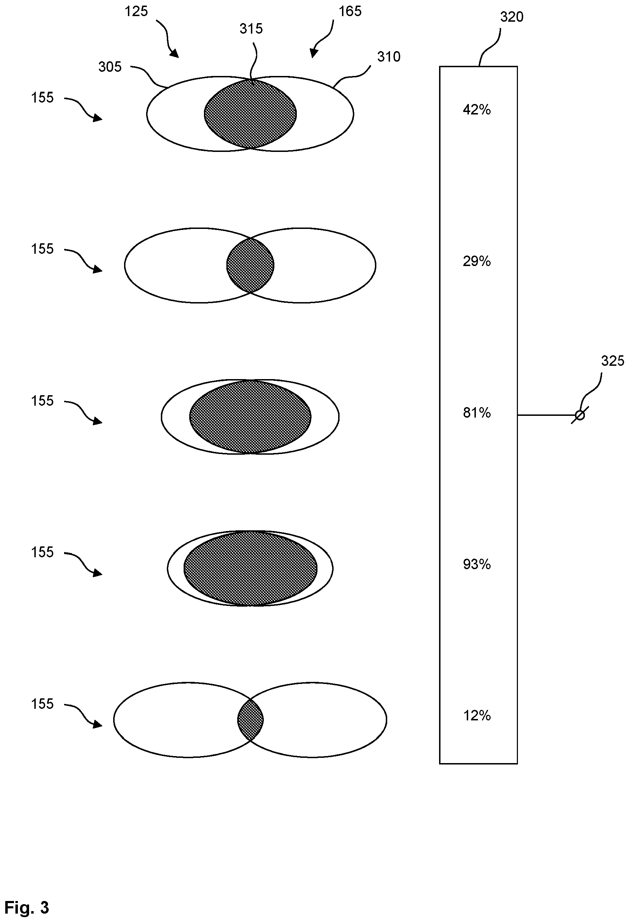

Figur 3 zeigt eine beispielhafte Bestimmung, ob Ähnlichkeit zwischen zwei Objekten 125, 165 vorliegt oder nicht. Beide Objekte 125, 165 haben jeweils mehrere Objektinformationen 155, wobei vorliegend davon ausgegangen wird, dass jede zu vergleichende Objektinformation 155 an beiden Objekten 125, 165 vorliegen und belegt sind, also jeweils einen nicht-leeren Wert tragen. Eine Objekteigenschaft 155 des ersten Objekts 125 wird hier auch erste Objekteigenschaft 305 und eine korrespondierende Objekteigenschaft 155 des zweiten Objekts 165 zweite Objekteigenschaft 310 genannt. Die korrespondierenden Objekteigenschaften 305, 310 resultieren in einer Überdeckung 315, die numerisch zwischen 0% und 100% betragen kann und graphisch als dunkle Schnittmenge der als Mengen visualisierten Objekteigenschaften 305, 310 dargestellt ist.

Vorliegend sind fünf Objekteigenschaften 155 dargestellt, deren Überdeckungen 315 beispielhaft zwischen 12% und 93% liegen. Die Überdeckungen 315 können dann in einem Zusammenfasser 320 zusammengefasst und mit einem vorbestimmten Schwellenwert verglichen werden. Der Zusammenfasser 320 kann ein Signal nach außen bereitstellen, das entweder auf eine vorliegende oder auf eine mangelnde Ähnlichkeit zwischen den Objekten 125, 165 hinweist. Ein Bestimmungsergebnis kann mittels einer Schnittstelle 325 bereitgestellt werden.

In einer ersten Ausführungsform wird ein Durchschnitt der Überdeckungen 315 bestimmt und mit einem Schwellenwert verglichen. Übersteigt der Durchschnitt den Schwellenwert, so kann von einer vorliegenden bzw. ausreichenden Ähnlichkeit ausgegangen werden. Der Durchschnitt kann beispielsweise arithmetisch oder geometrisch bestimmt werden. Die Überdeckungen 315 können auch unterschiedlich gewichtet werden. Der Durchschnitt kann auch einen Median umfassen, für dessen Bestimmung einer oder mehrere höchste und/oder einer oder mehrere niedrigste Überdeckungen 315 ignoriert werden können.

In einer zweiten Ausführungsform kann jede Überdeckung 315 separat mit einem vorbestimmten, zugeordneten Schwellenwert verglichen werden. Ähnlichkeit zwischen den Objekten 125, 165 kann vorliegen, wenn alle, ein vorbestimmter Teil oder eine vorbestimmte Anzahl von Überdeckungen 315 den jeweils zugeordneten Schwellenwert übersteigen.

Die Ausführungsformen können auch miteinander kombiniert werden, beispielsweise indem einige Überdeckungen 315 mittels der ersten und andere mittels der zweiten Ausführungsform verarbeitet werden.

In einer Weiterentwicklung kann eine Ähnlichkeit jedenfalls dann als nicht vorliegend bestimmt werden, wenn eine vorbestimmte Bedingung bezüglich einer der Überdeckungen 315 zutrifft. Liegt beispielsweise eine der Überdeckungen 315 unterhalb eines weiteren vorbestimmten Schwellenwerts, etwa ca. 5%, so können die Objekte 125, 165 als einander nicht bzw. nicht ausreichend ähnlich bestimmt werden, selbst wenn beispielsweise die durchschnittliche Ähnlichkeit über einem zugeordneten Schwellenwert liegt.

### Bezugszeichen

- 100: System
- 105: erste Quelle
- 110: zweite Quelle
- 115: zentrale Stelle
- 120: Nutzer
- 125: Objekt
- 130: Karte
- 135: Abschnitt der Karte (Kachel)
- 140: Verarbeitungsvorrichtung
- 145: Speichervorrichtung
- 150: Schnittstelle
- 155: Objektinformation
- 160: Kennung
- 165: erstes Objekt
- 170: zweites Objekt
- 175: drittes Objekt

- 200: Verfahren
- 205: Erfassen Karte mit ersten Objekten
- 210: Erfassen zweites Objekt
- 215: Bestimmen Kachel, Auswahl erster Objekte
- 220: Bestimmen Ähnlichkeit aller ersten Objekte mit dem zweiten Objekt
- 225: Bestimmen drittes Objekt mit höchster Ähnlichkeit
- 230: höchste Ähnlichkeit > Schwellenwert?
- 235: neues erstes Objekt anlegen, neue Kennung bestimmen
- 240: bestimmte Kennung bereitstellen
- 245: Kennung des ähnlichsten Objekts bestimmen
- 250: Objektinformationen fusionieren

- 305: erste Objekteigenschaft, Objekteigenschaft des ersten Objekts
- 310: zweite Objekteigenschaft, Objekteigenschaft des zweiten Objekts
- 315: Überdeckung
- 320: Zusammenfasser
- 325: Schnittstelle

## Patentansprüche

1. Verfahren (200) zum Verwalten einer geographischen Karte (130), wobei das Verfahren (200) folgende Schritte umfasst:
- Erfassen (205) einer Karte (130), die eines oder mehrere erste Objekte (165) umfasst,
- wobei jedem ersten Objekt (165) eine eindeutige Kennung (160) zugeordnet ist;
- Erfassen (210) eines zweiten Objekts (170);
- wobei den ersten Objekten (165) und dem zweiten Objekt (170) jeweils wenigstens eine Objektinformation (155) zugeordnet ist;
- Bestimmen (225) eines dritten Objekts (175), das unter den ersten Objekten (165) die größte Ähnlichkeit zum zweiten Objekt (170) aufweist, wobei die Ähnlichkeit zwischen einem der ersten Objekte (165) und dem zweiten Objekt (170) bezüglich Ähnlichkeiten einander entsprechender Objektinformationen (155) bestimmt wird;
- Zuordnen (245) der Kennung (160) des dritten Objekts (175) zum zweiten Objekt (170), falls die bestimmte größte Ähnlichkeit ein erstes vorbestimmtes Maß übersteigt, und
das Verfahren **gekennzeichnet ist durch** den Schritt:
- Bestimmen einer neuen eindeutigen Kennung (160) und Zuordnen (235) Z der neuen Kennung (160) zum zweiten Objekt (170), falls die bestimmte Ähnlichkeit zwischen dem zweiten Objekt (170) und dem dritten Objekt (175) unterhalb eines zweiten vorbestimmten Maßes liegt, wobei das zweite Maß kleiner als das erste Maß oder so groß wie das erste Maß ist.

2. Verfahren (200) nach Anspruch 1, wobei der Karte (130) ein neues erstes Objekt (165) zugeordnet (235) wird, und dem neuen ersten Objekt (165) eine neue Kennung (160) und die Objektinformationen (155) des zweiten Objekts (170) zugeordnet werden.

3. Verfahren (200) nach einem der vorangehenden Ansprüche, wobei Objektinformationen (155) des zweiten Objekts (170) mit denen des dritten Objekts (175) integriert (250) werden, falls die Ähnlichkeit zwischen dem zweiten Objekt (170) und dem dritten Objekt (175) ein vorbestimmtes Maß übersteigt.

4. Verfahren (200) nach einem der vorangehenden Ansprüche, wobei die ersten Objekte (165) und das zweite Objekt (170) demselben vorbestimmten geographischen Ausschnitt (135) der Karte (130) zugeordnet sind.

5. Verfahren (200) nach einem der vorangehenden Ansprüche, wobei die für die Ähnlichkeitsbestimmung betrachteten Objektinformationen (155) geographische Positionen des ersten und des zweiten Objekts (170) umfassen.

6. Verfahren (200) nach Anspruch 5, wobei die für die Ähnlichkeitsbestimmung betrachteten Objektinformationen (155) Ausdehnungen des ersten und des zweiten Objekts (170) umfassen.

7. Verfahren (200) nach einem der Ansprüche 5 bis 6, wobei die für die Ähnlichkeitsbestimmung betrachteten Objektinformationen (155) einen Objekttyp umfassen.

8. Verfahren (200) nach einem der Ansprüche 5 bis 7, wobei die für die Ähnlichkeitsbestimmung betrachteten Objektinformationen (155) einen Hinweis auf ein anderes erstes Objekt (165) umfassen.

9. Verfahren (200) nach einem der vorangehenden Ansprüche, wobei auf der Basis der Karte (130) eine Navigation eines Kraftfahrzeugs (120) erfolgt.

10. Vorrichtung (115) zur Verwaltung einer geographischen Karte (130), wobei die Vorrichtung (115) folgendes umfasst:
- eine Speichervorrichtung (145) zur Ablage einer Karte (130), die eines oder mehrere erste Objekte (165) umfasst,
- wobei jedem ersten Objekt (165) eine eindeutige Kennung (160) zugeordnet ist;
- eine Schnittstelle (150) zur Erfassung eines zweiten Objekts (170),
- wobei den ersten Objekten (165) und dem zweiten Objekt (170) jeweils wenigstens eine Objektinformation (155) zugeordnet ist;
- eine Verarbeitungseinrichtung (140), die dazu eingerichtet ist, ein drittes Objekt (175) zu bestimmen, das unter den ersten Objekten (165) die größte Ähnlichkeit zum zweiten Objekt (170) aufweist, wobei die Ähnlichkeit zwischen einem der ersten Objekte (165) und dem zweiten Objekt (170) bezüglich Ähnlichkeiten einander entsprechender Objektinformationen (155) bestimmt wird; die Kennung (160) des dritten Objekts (175) dem zweiten Objekt (170) zuzuordnen, falls die bestimmte größte Ähnlichkeit ein vorbestimmtes Maß übersteigt; und
**dadurch gekennzeichnet, dass** die Verarbeitungseinrichtung (140) weiter dazu eingerichtet ist,
- eine neue eindeutige Kennung (160) zu bestimmen und die neue Kennung (160) dem zweiten Objekt (170) zuzuordnen, falls die bestimmte Ähnlichkeit zwischen dem zweiten Objekt (170) und dem dritten Objekt (175) unterhalb eines zweiten vorbestimmten Maßes liegt, wobei das zweite Maß kleiner als das erste Maß oder so groß wie das erste Maß ist.

11. Vorrichtung (115) nach Anspruch 10, ferner umfassend eine weitere Schnittstelle (150) zur Bereitstellung der dem zweiten Objekt (170) zugeordneten Kennung (160).

## Claims

1. Method (200) for managing a geographical map (130), wherein the method (200) comprises the following steps:
- acquiring (205) a map (130) that comprises one or more first objects (165),
- wherein each first object (165) is assigned a unique identifier (160);
- acquiring (210) a second object (170);
- wherein the first objects (165) and the second object (170) are each assigned at least one item of object information (155);
- determining (225) a third object (175) that, out of the first objects (165), has the greatest similarity to the second object (170), wherein the similarity between one of the first objects (165) and the second object (170) is determined in relation to similarities between items of object information (155) corresponding to one another;
- assigning (245) the identifier (160) of the third object (175) to the second object (170) if the determined greatest similarity exceeds a first predetermined level, and
the method is **characterized by** the following step:
- determining a new unique identifier (160) and assigning (235) the new identifier (160) to the second object (170) if the determined similarity between the second object (170) and the third object (175) is below a second predetermined level, wherein the second level is smaller than the first level or the same as the first level.

2. Method (200) according to Claim 1, wherein the map (130) is assigned (235) a new first object (165), and the new first object (165) is assigned a new identifier (160) and the items of object information (155) of the second object (170).

3. Method (200) according to either of the preceding claims, wherein items of object information (155) of the second object (170) are integrated (250) with those of the third object (175) if the similarity between the second object (170) and the third object (175) exceeds a predetermined level.

4. Method (200) according to one of the preceding claims, wherein the first objects (165) and the second object (170) are assigned to the same predetermined geographical section (135) of the map (130).

5. Method (200) according to one of the preceding claims, wherein the items of object information (155) considered for the similarity determination comprise geographical positions of the first and the second object (170) .

6. Method (200) according to Claim 5, wherein the items of object information (155) considered for the similarity determination comprise extents of the first and the second object (170).

7. Method (200) according to either of Claims 5 and 6, wherein the items of object information (155) considered for the similarity determination comprise an object type.

8. Method (200) according to one of Claims 5 to 7, wherein the items of object information (155) considered for the similarity determination comprise an indication of another first object (165).

9. Method (200) according to one of the preceding claims, wherein a motor vehicle (120) is navigated on the basis of the map (130).

10. Device (115) for managing a geographical map (130), wherein the device (115) comprises the following:
- a storage device (145) for storing a map (130) that comprises one or more first objects (165),
- wherein each first object (165) is assigned a unique identifier (160);
- an interface (150) for acquiring a second object (170),
- wherein the first objects (165) and the second object (170) are each assigned at least one item of object information (155);
- a processing unit (140) that is configured to determine a third object (175) that, out of the first objects (165), has the greatest similarity to the second object (170), wherein the similarity between one of the first objects (165) and the second object (170) is determined in relation to similarities between items of object information (155) corresponding to one another; to assign the identifier (160) of the third object (175) to the second object (170) if the determined greatest similarity exceeds a predetermined level; and
**characterized in that** the processing unit (140) is furthermore configured:
- to determine a new unique identifier (160) and to assign the new identifier (160) to the second object (170) if the determined similarity between the second object (170) and the third object (175) is below a second predetermined level, wherein the second level is smaller than the first level or the same as the first level.

11. Device (115) according to Claim 10, furthermore comprising a further interface (150) for providing the identifier (160) assigned to the second object (170).

## Revendications

1. Procédé (200) de gestion d'une carte géographique (130), le procédé (200) comprenant les étapes suivantes :
- acquisition (205) d'une carte (130) qui comporte un ou plusieurs premiers objets (165),
- un identifiant (160) univoque étant affecté à chaque premier objet (165) ;
- acquisition (210) d'un deuxième objet (170) ;
- au moins une information d'objet (155) étant respectivement affectée au premier objet (165) et au deuxième objet (170) ;
- détermination (225) d'un troisième objet (175) qui, parmi les premiers objets (165), présente la plus grande similitude avec le deuxième objet (170), la similitude entre l'un des premiers objets (165) et le deuxième objet (170) étant déterminée en relation avec les similitudes des informations d'objet (155) qui correspondent les unes aux autres ;
- affectation (245) de l'identifiant (160) du troisième objet (175) au deuxième objet (170) dans le cas où la plus grande similitude déterminée dépasse un premier niveau prédéterminé, et
le procédé étant **caractérisé par** l'étape :
- détermination d'un nouvel identifiant (160) univoque et affectation (235) du nouvel identifiant (160) au deuxième objet (170) dans le cas où la similitude déterminée entre le deuxième objet (170) et le troisième objet (175) se trouve au-dessous d'un deuxième niveau prédéterminé, le deuxième niveau étant inférieur au premier niveau ou égal au premier niveau.

2. Procédé (200) selon la revendication 1, un nouveau premier objet (165) étant affecté (235) à la carte (130), et un nouvel identifiant (160) ainsi que les informations d'objet (155) du deuxième objet (170) étant affectés au nouveau premier objet (165).

3. Procédé (200) selon l'une des revendications précédentes, les informations d'objet (155) du deuxième objet (170) étant intégrées (250) avec celles du troisième objet (175) dans le cas où la similitude entre le deuxième objet (170) et le troisième objet (175) dépasse un niveau prédéterminé.

4. Procédé (200) selon l'une des revendications précédentes, les premiers objets (165) et le deuxième objet (170) étant affectés à la même portion géographique (135) prédéterminée de la carte (130).

5. Procédé (200) selon l'une des revendications précédentes, les informations d'objet (155) prises en compte pour la détermination de la similitude comprenant les positions géographiques du premier et du deuxième objet (170).

6. Procédé (200) selon la revendication 5, les informations d'objet (155) prises en compte pour la détermination de la similitude comprenant les étendues du premier et du deuxième objet (170).

7. Procédé (200) selon l'une des revendications 5 à 6, les informations d'objet (155) prises en compte pour la détermination de la similitude comprenant un type d'objet.

8. Procédé (200) selon l'une des revendications 5 à 7, les informations d'objet (155) prises en compte pour la détermination de la similitude comprenant une mention à un autre premier objet (165).

9. Procédé (200) selon l'une des revendications précédentes, une navigation d'un véhicule automobile (120) s'effectuant sur la base de la carte (130).

10. Arrangement (115) de gestion d'une carte géographique (130), l'arrangement (115) comprenant les éléments suivants :
- un arrangement de mémorisation (145) destiné au stockage d'une carte (130), laquelle comporte un ou plusieurs premiers objets (165),
- un identifiant (160) univoque étant affecté à chaque premier objet (165) ;
- une interface (150) destinée à l'acquisition d'un deuxième objet (170),
- au moins une information d'objet (155) étant respectivement affectée au premier objet (165) et au deuxième objet (170) ;
- un dispositif de traitement (140), qui est conçu pour déterminer un troisième objet (175) qui, parmi les premiers objets (165), présente la plus grande similitude avec le deuxième objet (170), la similitude entre l'un des premiers objets (165) et le deuxième objet (170) étant déterminée en relation avec les similitudes des informations d'objet (155) qui correspondent les unes aux autres ; affecter l'identifiant (160) du troisième objet (175) au deuxième objet (170) dans le cas où la plus grande similitude déterminée dépasse un premier niveau prédéterminé ; et
**caractérisé en ce que** le dispositif de traitement (140) est en outre conçu pour
- déterminer un nouvel identifiant (160) univoque et affecter le nouvel identifiant (160) au deuxième objet (170) dans le cas où la similitude déterminée entre le deuxième objet (170) et le troisième objet (175) se trouve au-dessous d'un deuxième niveau prédéterminé, le deuxième niveau étant inférieur au premier niveau ou égal au premier niveau.

11. Arrangement (115) selon la revendication 10, comprenant en outre une interface (150) destinée à mettre à disposition l'identifiant (160) affecté au deuxième objet (170).
